# EUROPÄISCHE PATENTANMELDUNG

(11) **EP 1 911 707 A1**
(43) Veröffentlichungstag der Anmeldung: **16.04.2008**
(21) Anmeldenummer: 06021509.2
(22) Anmeldetag: 13.10.2006
(51) Int. Cl.: B65H 29/02, B65H 5/14

(54) **Greifer**

(71) Anmelder: INDAG Gesellschaft für Industriebedarf mbH & Co. Betriebs KG, 69214 Eppelheim (DE)
(72) Erfinder: Wild, Hans-Peter, Dr., 69214 Eppelheim (DE); Kraft, Eberhard, 74924 Neckarbischofsheim (DE); Lechert, Frank, 69469 Weinheim (DE)
(74) Vertreter: Grünecker, Kinkeldey, Stockmair & Schwanhäusser Anwaltssozietät

(57) **Zusammenfassung**

Es wird ein Greifer (1) beschrieben, der insbesondere für Gegenstände geringer Stärke eine sichere sowie einfache und schnell zu betätigende Klemmung sicherstellt. Der Greifer enthält zu diesem Zweck zwei über eine Übertragungseinrichtung (7) relativ zueinander bewegbare Klemmbacken (4a, 4b) und einen Kniehebel (8) mit einem ersten und einem zweiten Hebelglied (8a, 8b), die im gestreckten Zustand die Schließposition der Klemmbacken (4a, 4b) belasten. Jedes Hebelglied ist mit seinem ersten Ende über eine erste mit Hilfe eines Betätigungselementes (9) verschiebbare, definierte Schwenkachse (10a, 10b) gelagert, während das zweite Ende jedes Hebelgliedes (8a, 8b) mit dem jeweils zugeordneten Klemmbacken (4a, 4b) verbunden ist.

## Beschreibung

Die Erfindung bezieht sich auf einen Greifer, der speziell zur Handhabung von Gegenständen geringer Stärke ausgelegt ist, wie dies beispielsweise Folienbeutel sind, die an Versiegelungsnähten ergriffen und in diesem Zustand hängend oder liegend transportiert werden müssen.

Greifer für Förderzwecke sind in den unterschiedlichsten konstruktiven Ausgestaltungen bekannt. Greifer für die unterschiedlichsten Verwendungszwecke können beispielsweise zwei relativ zueinander bewegbare Klemmbacken enthalten, die über ein Übertragungselement aus ihrem Klemmgriff in eine Öffnungsstellung und zurück bewegbar sind, wobei das Übertragungselement auch Hebelübertragungen enthalten kann.

Sollen jedoch Gegenstände geringer Stärke transportiert werden, wie dies beispielsweise bei der Handhabung von Folienbeuteln notwendig ist, die hängend transportiert werden sollen und zu diesem Zweck an ihren Versiegelungsnähten ergriffen werden müssen, so sind viele der bekannten Greifer nicht oder nur eingeschränkt brauchbar. Dies liegt daran, dass jedes Spiel, jede Toleranz und jede Unregelmäßigkeit im Übertragungselement die Klemmkraft beeinflusst, was sich bei Gegenständen geringer Stärke ungleich stärker auf die Festigkeit des Klemmgriffes auswirkt als bei Gegenständen größerer Stärke. Ein weiteres Problem ergibt sich aus dem allgemeinen Bestreben Handhabungs- bzw. Fördergeschwindigkeiten zu erhöhen, ohne dass die Sicherheit der Klemmung leidet. Demzufolge muss ein Greifer zwar möglichst leichtgängig zu betätigen sein, dies darf jedoch nicht auf Kosten der aufgebrachten Klemmkraft gehen.

Der Erfindung liegt somit die Aufgabe zugrunde, einen Greifer mit einer verbesserten Wirksamkeit im Hinblick auf Betätigungsgeschwindigkeit und sicherer Klemmkraft bereitzustellen, der sich insbesondere für Gegenstände geringer Stärke eignet.

Die Aufgabe wird durch die im Anspruch 1 angegebenen Merkmale gelöst.

Durch die erfindungsgemäße Verwendung eines Kniehebels mit definierter, d.h. in ihrer Lage an der Anordnungsstelle im wesentlichen spielfrei festgelegter Schwenkachse, ist in der Übertragungseinrichtung kein Spiel vorhanden, das, insbesondere im rauen Förderbetrieb, die Klemmkraft negativ beeinflussen könnte. Weiterhin sind Kniehebel an sich dafür bekannt, dass die entstehende Kraft im Bereich des (fast) ausgestreckten Knies stark verstärkt werden kann, während vorhergehende Bewegungen mit geringerer Kraft uns somit mit hoher Geschwindigkeit erfolgen können. Bislang werden Kniehebel zur Kraftübertragung hauptsächlich bei Pressen (Kniehebelpresse) oder dgl. eingesetzt.

Vorteilhafte Weiterbildungen der Erfindung sind den Unteransprüchen zu entnehmen.

Durch die Verwendung eines Zwischenstücks, an dem die ersten Schwenkachsen beider Hebelelemente angeordnet sind, wird die Kraftübertragung weiter verbessert.

Auch die Verwendung eines Übertragungshebels zum Übertragen der Betätigungskraft auf die Klemmbacken dient der verbesserten Kraftübertragung.

Eine besonders vorteilhafte konstruktive Ausgestaltung zumindest der ersten Schwenkachse besteht in einer Lagewelle/Lagerbohrung-Kombination, da hier der Verschleiß relativ gering ist und von Natur aus kaum Spiel auftritt. Zweckmäßigerweise sind alle drei Schwenkachsen auf diese konstruktive Weise ausgestattet.

Um die Klemmstellung der Klemmbacken zu sichern, wird bevorzugt ein Federelement und/oder ein Anschlag eingesetzt.

Eine weitere mögliche Quelle eines Spiels im System wird durch die Verwendung eines linearen Gleitlagers für die Bewegung des Betätigungselementes ausgeräumt.

Die Verwendung eines (massiven) Trägers zur Lagerung der Schwenkachse und zur Befestigung des Betätigungselementes versteift den Greifer weiter.

Ein Ausführungsbeispiel der Erfindung wird nachfolgend anhand der Zeichnungen näher erläutert. Es zeigen:
- Fig. 1: eine perspektivische, schematische Darstellung eines erfindungsgemäßen Greifers,
- Fig. 2: die Vorderansicht des Greifers gemäß Fig. 1 in Klemmposition der Backen, und
- Fig. 3: die Vorderansicht des Greifers gemäß Fig. 1 in Offenposition der Backen.

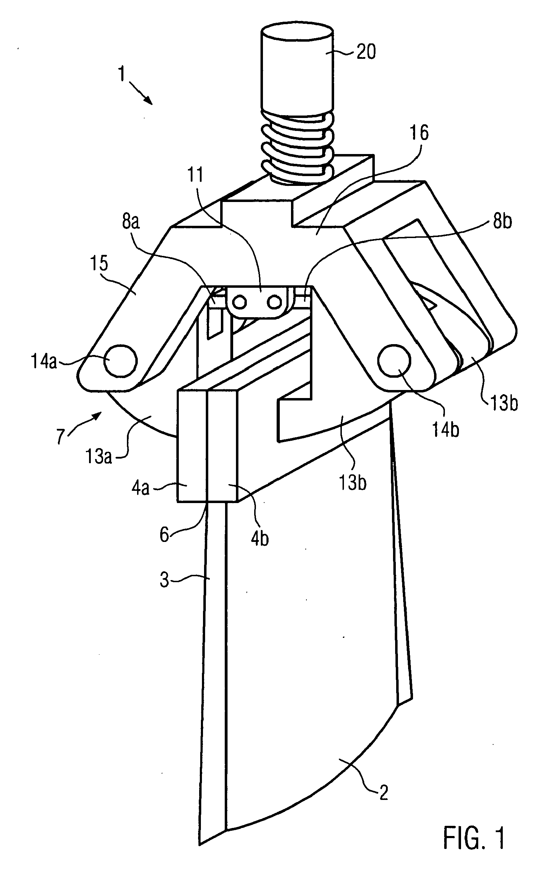

Fig. 1 zeigt einen erfindungsgemäßen Greifer 1 in seiner Verwendung zum Handhaben von Gegenständen 2 geringer Stärke, die im dargestellten Ausführungsbeispiel als Folienbeutel mit Versiegelungsrändern 3 ausgebildet ist, wobei der Greifer 1 zum Ergreifen des Beutels am nicht gezeichneten, oberen Versiegelungsrand 3 des Folienbeutels ausgebildet ist. Versiegelungsränder von Folienbeuteln sind sehr dünn, auf jeden Fall dünner als 0,5 mm und bevorzugt im Bereich zwischen 0,02 bis 0,5 mm.

Der Greifer 1 wird bevorzugt zum Transport der Gegenstände 2 eingesetzt und hängt zu diesem Zweck beispielsweise an einem endlos umlaufenden Fördermittel, wie beispielsweise einer Förderkette, oder ist an einzeln bewegbaren Armen angeordnet oder wird hin- und hergehend angetrieben oder dgl.

Der Greifer 1 enthält zwei Klemmbacken 4a, 4b, die an die Art des zu transportierenden Gegenstandes angepasst sind. Im dargestellten Ausführungsbeispiel enthalten die Klemmbacken 4a, 4b rechteckig Klemmklötze, die an den einander zugewandten Seiten mit einem reibungserhöhenden, begrenzt flexiblen Belag 6, z. B. einem Noppenbelag, versehen sind, der die Klemmung verbessert.

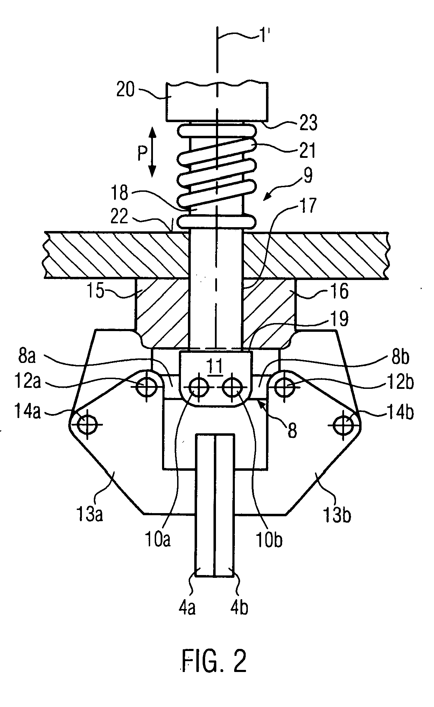

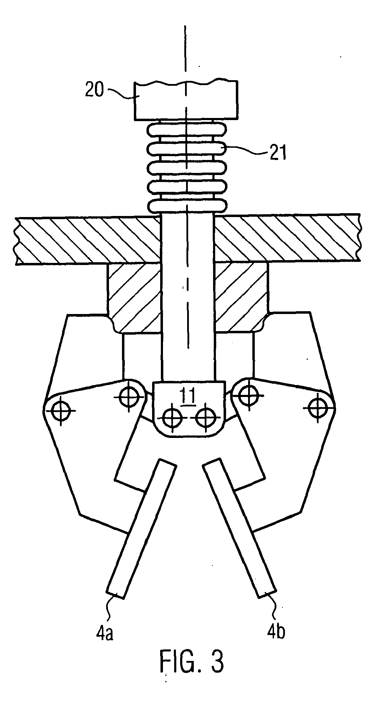

Die Klemmbacken 4a, 4b werden durch eine Übertragungseinrichtung 7 zwischen der in den Fig. 1 und 2 dargestellten Klemmposition und der in Fig. 3 dargestellten Offenposition bewegt, insbesondere verschwenkt.

Die Übertragungseinrichtung 7 ist im Wesentlichen symmetrisch beidseitig einer Mittelebene 1' ausgebildet, die durch die Klemmflächen der Klemmbacken 4a, 4b in Klemmposition verläuft. Die Übertragungseinrichtung 7 enthält einen Kniehebel 8 mit zwei Hebelgliedern 8a, 8b, die hier als Stäbe ausgebildet sind. Die freien Enden der Hebelglieder 8a, 8b sind so mit einem Betätigungselement 9 verbunden, dass sie zwischen einer Stellung, in der die Hebelglieder 8a, 8b fluchtend miteinander ausgerichtet sind (gestreckter Zustand - Fig. 2), in eine Position bewegbar sind, in der die Hebelglieder 8a, 8b einen Winkel zueinander einschließen. Die Befestigung der Hebelglieder 8a, 8b erfolgt über eine definierte (d. h. spielfrei oder im wesentlichen spielfrei gelagerte) erste Schwenkachse 10a, 10b, wobei im dargestellten Ausführungsbeispiel jedes Hebelglied 8a, 8b eine eigene Schwenkachse 10a, 10b aufweist, die an einem Zwischenstück 11 des Betätigungselementes 9 beidseitig der Mittellinie 1' symmetrisch und mit Abstand gegenüberliegend angeordnet sind. Die ersten Schwenkachsen 10a, 10b enthalten bevorzugt wenigstens einen Drehstift und wenigstens eine Lagerbohrung, wobei im dargestellten Ausführungsbeispiel der Stift fest im gabelförmig ausgebildeten Zwischenstück 11 angeordnet ist, und die Hebelglieder 8a, 8b drehbar mit einer Bohrung unter Passung auf dem Stift sitzen. Die der,ersten Schwenkachse 10a, 10b gegenüberliegenden, freien Enden der Hebelglieder 8a, 8b sind jeweils über eine zweite Schwenkachse 12a, 12b mit den Klemmbacken 4a, 4b verbunden. Auch die zweite Schwenkachse 12a, 12b ist definiert, d.h. in ihrer Lage an ihrer Anordnungsstelle, festgelegt, die bevorzugt wiederum durch eine Drehstift/Lagerbohrung-Kombination gebildet wird. Die zweiten Schwenkachsen 12a, 12b befinden sich jeweils an einem Übertragungshebel 13a, 13b, der jeweils fest mit einem der Backen 4a, 4b verbunden ist.

Die Übertragungshebel 13a, 13b sind jeweils über eine dritte Schwenkachse 14a, 14b an einem Träger 15 gelagert. Die dritte Schwenkachse 14a, 14b weist jeweils einen Abstand zur zweiten Schwenkachse 12a, 12b und zur Befestigungsstelle am Klemmhebel 4a, 4b auf und liegt zwischen der Befestigungsstelle des Übertragungshebels 13a, 13b am jeweiligen Klemmhebel 4a, 4b und der zweiten Schwenkachse 12a, 12b. Bevorzugt bilden die Schwenkachsen 12 ,14 und die Befestigungsstelle ein Dreieck..Die dritten Schwenkachsen 14a, 14b sind bevorzugt definiert, d.h. in ihrer Lage am Schwenkhebel 13a, 13b und dem Träger 15 festgelegt, was wiederum bevorzugt durch eine Drehstift/Lagerbohrung-Kombination erfolgt. Im dargestellten Ausführungsbeispiel ist der Übertragungshebel 13a, 13b im Bereich der zweiten Schwenkachse 12a, 12b gabelförmig ausgebildet und fest mit einem Drehstift verbunden, wobei sich die Hebelglieder 8a, 8b in die Gabelform hineinerstrecken und mit einer Lagerbohrung drehbar auf dem Drehstift sitzen. Im Bereich der dritten Schwenkachsen 14a, 14b ist der Träger 15 gabelförmig ausgebildet, wobei auch hier ein Drehstift fest in der Gabel sitzt und der Übertragungshebel 13a, 13b mit einer Lagerbohrung drehbar auf dem Drehstift sitzt. Es ist jedoch bei allen drei Schwenkachsen möglich, die Konstruktion umzudrehen, so dass sich der Stift in der Lagebohrung dreht.

Der Träger 15 ist ortsfest, was bedeutet, dass er fest mit an der gewünschten Struktur, beispielsweise einem Förderer, befestigt ist, jedoch sich selbstverständlich zusammen mit diesem bewegen kann.

Der Träger 15 enthält ein Führungsstück 16, in dem das Betätigungselement 9 in Richtung des Doppelpfeils P linear bewegbar, bevorzugt verschiebbar, ist. Im dargestellten Ausführungsbeispiel enthält das Führungsstück 16 eine symmetrisch um die Mittellinie 1' angeordnete Bohrung 17 und das Betätigungselement 9 einen Schaft 18, der in der als Gleitlager ausgebildeten Führungsbohrung 17 läuft. Ein Ende des Schaftes 18 ist fest mit dem Zwischenstück 11 verbunden, wobei das Zwischenstück 11 mit dem Führungsstück 16 einen Anschlag 19 bildet. Zu diesem Zweck steht im bevorzugten Ausführungsbeispiel das Zwischenstück 11 zumindest bereichsweise über den Durchmesser des Schaftes 8 über und schlägt an eine nach unten weisende Oberfläche des Führungsstücks 16 an.

Das dem Führungsstück 11 abgewandte andere freie Ende des Schaftes 18 ist mit einem Betätigungskopf 20 versehen, der beispielsweise als Nockenfolger für eine Nockensteuerung des Kniehebels 8 ausgebildet sein kann. Das Betätigungselement 9 enthält eine Feder 21, die das Betätigungselement 9 in einer Art und Weise belastet, die die beiden Klemmbacken 4a, 4b in ihre Klemmposition gegeneinander presst, wobei das Zwischenstück 11 an den Anschlag 19 gepresst wird. Dabei ist der Anschlag 19 so auf die Abmessungen des Greifers 1 abgestimmt, dass beim Anschlag des Zwischenstückes 11 an den Anschlag 19 der Kniehebel 8 gestreckt ist, d.h. die Hebelglieder 8a, 8b fluchtend zueinander ausgerichtet sind und die ersten und zweiten Schwenkachsen 10a, 10b, 12a, 12b in einer gemeinsamen Ebene liegen.

Die Feder 21 ist als Druckfeder ausgebildet und zwischen einem fest mit dem Träger 15 verbundenen Anschlag 22 und einem am Betätigungselement 9 festgelegten Anschlag 23 aufgespannt. Die Druckfeder 21 ist so bemessen und angeordnet, dass sie beim Öffnen der Klemmbacken 4a, 4b gespannt wird und sich unter Heranziehen des Zwischenstückes 11 an den Anschlag 19 entspannt, sobald die auf dem Betätigungskopf 20 ausgeübte Kraft wegfällt. Die Normalposition des Greifers 1 ist somit die in den Fig. 1 und 2 dargestellte Klemmposition während die Öffnungsposition der Backen 4a, 4b durch eine äußere Krafteinwirkung erreicht und gehalten werden muss. Mit anderen Worten, zum Öffnen der Klemmbacken 4a, 4b muss auf das Betätigungselement 9 eine in Ausrichtung der Figuren nach unten gerichtete Kraft ausgeübt werden. Dadurch wird das Zwischenstück 11 nach unten verschoben und nimmt über die Schwenkachse 10a, 10b die Hebelglieder 8a, 8b mit. Diese wiederum nehmen über die Schwenkachse 12a, 12b den Übertragungshebel 13a, 13b mit, der sich dadurch um die dritte Schwenkachse 14a, 14b in eine Stellung verschwenkt, in der die Backen 4a, 4b voneinander weg in eine winklig zueinander ausgerichtete Stellung (Offenstellung - Fig. 3) bewegt und den Gegenstand 2 freigibt.

In Abwandlung der beschriebenen und gezeichneten Ausführungsbeispiele können die Hebelglieder des Kniehebels unter Umständen direkt an den Klemmbacken angreifen. Gegebenenfalls kann der Kniehebel ohne Zwischenstück konstruiert sein, wobei die ersten Schwenkachsen beider Hebelglieder zusammenfallen. Auch muss das Betätigungselement nicht unbedingt mechanisch wirken, sondern kann beispielsweise durch hydraulische oder pneumatische Betätigungselemente ersetzt werden.

## Patentansprüche

1. Greifer (1), insbesondere für Gegenstände (2) geringer Stärke, mit zwei über eine Übertragungseinrichtung (7) relativ zueinander bewegbaren Klemmbacken (4a, 4b), wobei die Übertragungseinrichtung (7) einen Kniehebel (8) mit einem ersten und einem zweiten Hebelglied (8a, 8b) enthält, die im gestreckten Zustand die Schließposition der Klemmbacken (4a, 4b) belasten, wobei jedes Hebelglied (8a, 8b) mit seinem ersten Ende über eine erste mit Hilfe eines Betätigungselementes (9) verschiebbare, definierte Schwenkachse (10a, 10b) gelagert ist, während das zweite Ende jedes Hebelgliedes (8a, 8b) mit dem jeweils zugeordneten Klemmbacken (4a, 4b) verbunden ist.

2. Greifer nach Anspruch 1, **dadurch gekennzeichnet, dass** die Betätigungseinrichtung (9) ein bewegbares Zwischenstück (11) enthält, an dem die ersten Schwenkachsen (10a, 10b) beider Hebelelemente (8a, 8b) im Abstand zueinander angeordnet sind.

3. Greifer nach Anspruch 1 oder 2, **dadurch gekennzeichnet, dass** jeweils das zweite Ende jedes Hebelgliedes (8a, 8b) mit einer zweiten definierten Schwenkachse (12a, 12b) an einem Übertragungshebel (13a, 13b) gelagert ist, der mit dem zugeordneten Klemmbacken (4a, 4b) verbunden ist.

4. Greifer nach Anspruch 3, **dadurch gekennzeichnet, dass** der Übertragungshebel (12a, 12b) um eine dritte definierte Schwenkachse (14a, 14b) verschwenkbar ist, die im Abstand zur zweiten Schwenkachse (12a, 12b) angeordnet ist.

5. Greifer nach einem der Ansprüche 1 bis 4, **dadurch gekennzeichnet, dass** wenigstens die erste definierte Schwenkachse (10a, 10b) wenigstens einen Drehlagerstift in wenigstens einer Drehlagerbohrung enthält.

6. Greifer nach einem der Ansprüche 1 bis 5, **dadurch gekennzeichnet, dass** der gestreckte Zustand durch ein Federelement (21) belastet ist.

7. Greifer nach einem der Ansprüche 1 bis 6, **dadurch gekennzeichnet, dass** der gestreckte Zustand durch einen Anschlag (19) definiert ist.

8. Greifer nach Anspruch 7, **dadurch gekennzeichnet**, der Anschlag (19) am Betätigungselement (9) vorgesehen ist.

9. Greifer nach einem der Ansprüche 1 bis 8, **dadurch gekennzeichnet, dass** das Betätigungselement (9) in einem Gleitlager (17) verschiebbar ist.

10. Greifer nach einem der Ansprüche 1 bis 9, **dadurch gekennzeichnet, dass** ein Träger (15) vorgesehen ist, an dem der Klemmbacken (4a, 4b) über eine definierte Schwenkachse (14a, 14b) schwenkbar gelagert und das Betätigungselement (9) bewegbar befestigt ist.

## Geänderte Patentansprüche

### Geänderte Patentansprüche gemäss Regel 137(2) EPÜ.

**1.** Greifer (1), mit zwei über eine Übertragungseinrichtung (7) relativ zueinander bewegbaren Klemmbacken (4a, 4b), wobei die Übertragungseinrichtung (7) einen Kniehebel (8) mit einem ersten und einem zweiten Hebelglied (8a, 8b) enthält, die die Schließposition der Klemmbacken (4a, 4b) belasten, wobei jedes Hebelglied (8a, 8b) mit seinem ersten Ende über eine erste mit Hilfe eines Betätigungselementes (9) verschiebbare, definierte Schwenkachse (10a, 10b) gelagert ist, während das zweite Ende jedes Hebelgliedes (8a, 8b) mit dem jeweils zugeordneten Klemmbacken (4a, 4b) verbunden ist, **dadurch gekennzeichnet, dass** insbesondere für Gegenstände (2) geringer Stärke die Schließposition der Klemmbacken (4a, 4b) durch die sich in einem gestreckten, fluchtend zueinander ausgerichteten Zustand befindenden Hebelglieder (8a, 8b) belastet ist.

**2.** Greifer nach Anspruch 1, **dadurch gekennzeichnet, dass** die Betätigungseinrichtung (9) ein bewegbares Zwischenstück (11) enthält, an dem die ersten Schwenkachsen (10a, 10b) beider Hebelelemente (8a, 8b) im Abstand zueinander angeordnet sind.

**3.** Greifer nach Anspruch 1 oder 2, **dadurch gekennzeichnet, dass** jeweils das zweite Ende jedes Hebelgliedes (8a, 8b) mit einer zweiten definierten Schwenkachse (12a, 12b) an einem Übertragungshebel (13a, 13b) gelagert ist, der mit dem zugeordneten Klemmbacken (4a, 4b) verbunden ist.

**4.** Greifer nach Anspruch 3, **dadurch gekennzeichnet, dass** der Übertragungshebel (12a, 12b) um eine dritte definierte Schwenkachse (14a, 14b) verschwenkbar ist, die im Abstand zur zweiten Schwenkachse (12a, 12b) angeordnet ist.

**5.** Greifer nach einem der Ansprüche 1 bis 4, **dadurch gekennzeichnet, dass** wenigstens die erste definierte Schwenkachse (10a, 10b) wenigstens einen Drehlagerstift in wenigstens einer Drehlagerbohrung enthält.

**6.** Greifer nach einem der Ansprüche 1 bis 5, **dadurch gekennzeichnet, dass** der gestreckte Zustand durch ein Federelement (21) belastet ist.

**7.** Greifer nach einem der Ansprüche 1 bis 6, **dadurch gekennzeichnet, dass** der gestreckte Zustand durch einen Anschlag (19) definiert ist.

**8.** Greifer nach Anspruch 7, **dadurch gekennzeichnet**, der Anschlag (19) am Betätigungselement (9) vorgesehen ist.

**9.** Greifer nach einem der Ansprüche 1 bis 8, **dadurch gekennzeichnet, dass** das Betätigungselement (9) in einem Gleitlager (17) verschiebbar ist.

**10.** Greifer nach einem der Ansprüche 1 bis 9, **dadurch gekennzeichnet, dass** ein Träger (15) vorgesehen ist, an dem der Klemmbacken (4a, 4b) über eine definierte Schwenkachse (14a, 14b) schwenkbar gelagert und das Betätigungselement (9) bewegbar befestigt ist.
